Europäisches Patentamt

European Patent Office

Office européen des brevets

(19)

(11) Publication number: **0 366 642**
**A2**

# (12) EUROPEAN PATENT APPLICATION

(21) Application number: **89870158.6**

(22) Date of filing: **23.10.89**

(51) Int. Cl.5: **F24F 1/02**

(30) Priority: **24.10.88 BE 8801222**

(43) Date of publication of application:
**02.05.90 Bulletin 90/18**

(84) Designated Contracting States:
**AT BE CH DE ES FR GB GR IT LI LU NL SE**

(71) Applicant: **N.V. MATHIAS SYSTEMS**
**St. Janstraat 93**
**B-3118 Werchter(BE)**

(72) Inventor: **Verhulst, Lucien**
**Steenweg op Wechter 92**
**3130 Begijnendijk-Betekom(BE)**

(74) Representative: **Pieraerts, Jacques et al**
**Bureau Gevers S.A. rue de Livourne 7 bte 1**
**B-1050 Bruxelles(BE)**

(54) **A device for an energy-saving heat recuperation from a fluid.**

(57) The invention relates to a device for an energy-saving heat recuperation from a fluid formed by the combination of a static heat exchanger, comprising separate channels for the circulation of an incoming and an outgoing fluid, and a heat pump.

Fig. 2.

## A device for an energy-saving heat recuperation from a fluid

This invention relates to a device for an energy-saving heat recuperation from a fluid, i.a. for the heating of rooms, industrial buildings, halls, etc.

An object of the invention is to provide a device of the above mentioned type which has a considerably high yield particularly with an original arrangement of the elements forming the device.

To realize this according to the invention, the device according to the invention is formed by the combination of a static heat exchanger, comprising separate channels for the circulation of an incoming and an outgoing fluid, and a heat pump which comprises an evaporator, a compressor, a condenser and an expansion valve, in such a manner that the outgoing fluid, which leaves the heat exchanger, is further cooled down in contact with the evaporator of said heat pump in order that a substantial amount of energy is recuperated from this fluid, whereas the power of the condenser of the heat pump is supplied to the fluid leaving the heat exchanger resulting in a further temperature increase of said incoming fluid after the static heat exchanger.

In a preferred embodiment of the invention, the channels through which the incoming fluid and the outgoing fluid circulates, are disposed crosswise.

In a technical field in which the invention is mainly used, the incoming fluid is the exterior air whereas the outgoing fluid is the interior air of a room to be heated.

Other details and advantages of the invention will be shown in the following description of a device for an energy-saving heat recuperation. This description is only given by way of example and does not limit the scope of the invention. The reference numerals relate to the annexed figures.

Figure 1 is a schematic representation of a device according to the invention.

Figure 2 is another, also schematic representation of a preferred embodiment of the device according to the invention.

In the embodiment, described by way of example, the incoming fluid is the exterior air whereas the outgoing fluid is the interior air. These fluids are further called as such in the description so that the embodiment concerns the heating of a room, however the invention having a larger field of application.

The device shown schematically by these figures, is preferably used into the field of activity where the largest possible temperature differences occur. This concerns at least the heat exchanger.

The direction in which the fluid circulates through the necessary conducts is shown by arrows. The supply of heated up exterior air and the drain of hot living room air are indicated by shaded large arrows $P'$, $P''$ respectively.

On the other hand, the not shaded, large arrows $P'''$ and $P''''$ indicate respectively the supply of cold exterior air and the drain of cooled down living room air.

The partition wall which divides the two areas between which this temperature difference is at largest, is indicated by reference 1. The space to be heated is then indicated by reference 2 and the exterior air by reference 3.

The theoretical configuration of the device, being rectangularly shaped, has reference 4.

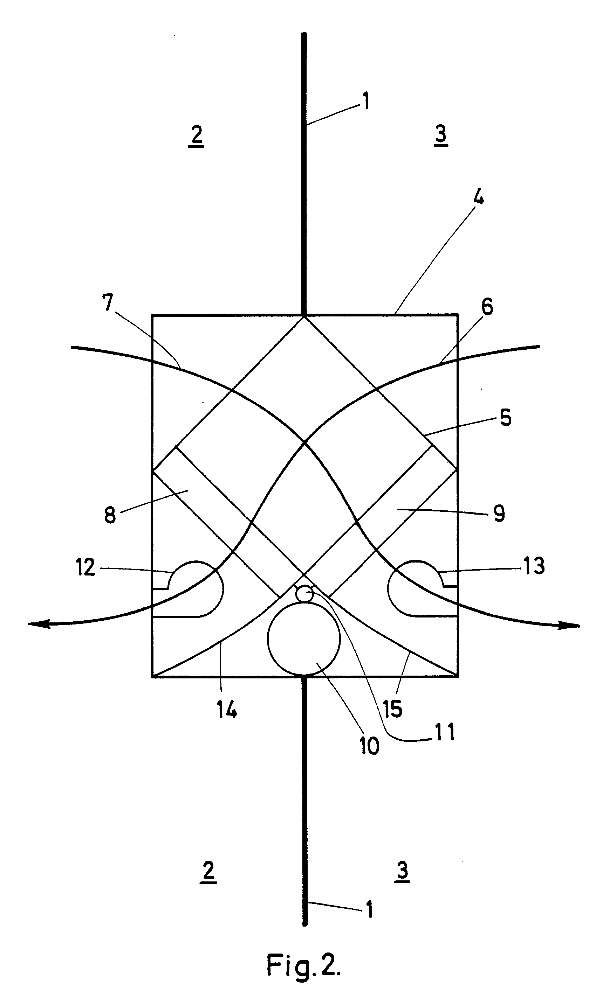

The first important element of the device is formed by the static heat exchanger 5. In this heat exchanger, the fresh exterior air circulates according to the path 6 and the interior air according to the path 7. The arrows show the flow direction of the circulating interior and exterior air. The channels which divide both of the air flows (interior and exterior air) in the static heat exchanger 5, can be disposed mutually perpendicularly. This is the structure shown in Figure 2. However, in principle, each other arrangement of the channels for the incoming, fresh exterior air and the outgoing interior air is possible. The channels can indeed be substantially parallel to each other and the incoming, fresh air can circulate then in counterflow with the outgoing interior air. It is also possible to make the two air flows to circulate in the same direction.

The second important element of the device according to the invention consists of a heat pump which is constructed in a usual manner of a condenser 8, an evaporator 9, a compressor 10 and an expansion valve 11. The circulation of the incoming, fresh exterior air and the circulation of the outgoing cooled down interior air is realised by means of fans 12 and 13 (Figure 2). The fans 12 and 13 are arranged in spaces which are i.a. delimited by the dividing walls 14 and 15.

The next example shows the advantages of the device according to the invention more clearly. In the heat exchanger 5, the sucked exterior air (path 6) is heated up by means of the interior air (path 7) which is sucked by means of fan 13. It may be supposed that the interior air has an average temperature of ± 18°C (20°C in the living rooms, 16°C in the bedrooms, laundry rooms, hobby rooms and the like).

In this way, part of the energy still present in the interior air is recuperated to the benefit of the colder exterior air.

On the other hand, the outgoing interior air (path 7) is cooled down further after the static heat exchanger 5 by means of the evaporator 9 and this untill a temperature of 2 to 5°C. Hereby, roughly a maximum amount of energy is recuperated from the interior air being removed by suction. Together with the small amount of power used by the compressor for driving the heat pump, the power recuperated by the evaporator is supplied in the condenser of the heat pump to the incoming air. Thereby, the temperature of the exterior air concerned will raise further, after being warmed up in the static heat exchanger, upto 30°C or more.

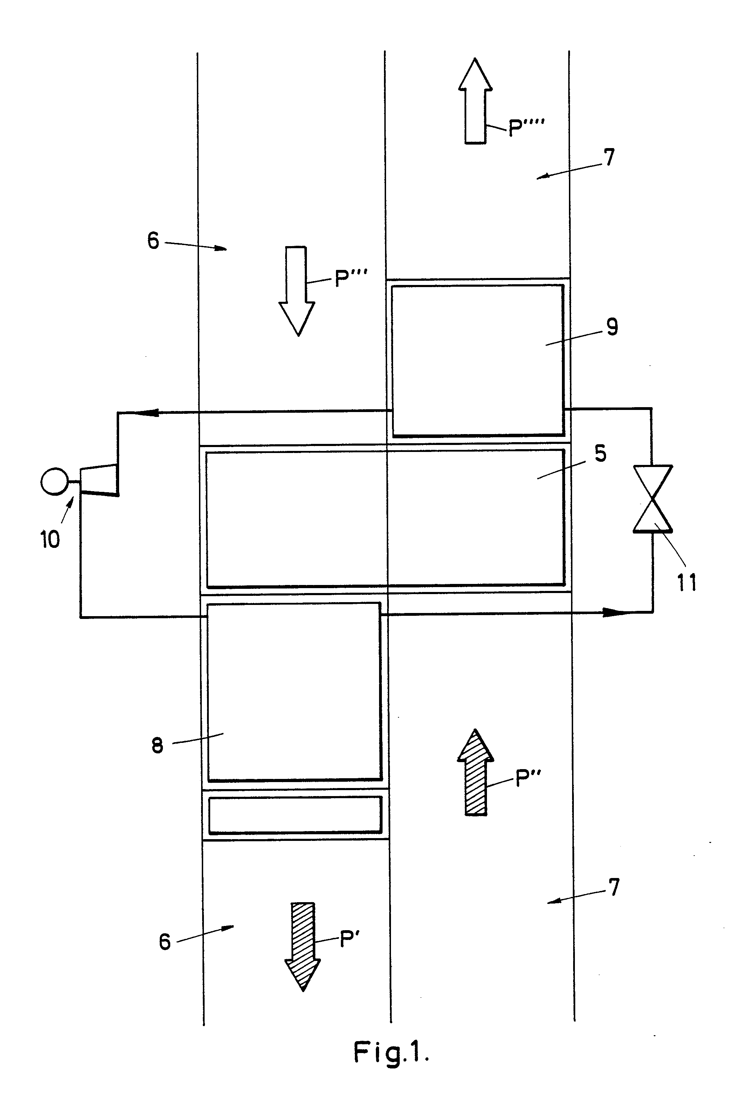

From the description of the device according to the invention given hereabove with reference to the schematic Figures 1 and 2, it follows already to what extent the device according to the invention functions in an energy-saving manner.

The static plate heat exchanger 5 provided for energy recuperation, which exchanger is build in in a device according to the invention, preferably consists of alternate planes and cross-shaped, corrugated aluminium plates. These plates are provided on both sides with a layer of vinyl lacquer which protects them against corrosion. The frame comprising the different channels for the circulation, in counterflow or in the same direction, of the incoming and outgoing air, is made of especially-designed aluminium profiles whereas the absolute separation of both air flows is assured by a silicone sealer.

Due to the small distances between the plates, there is formed a large exchange surface which is equal to 900 x the suck in surface. The corrugated plates provide for a high stability and a uniform distribution of the air and heat transfer. A high efficiency results from all these measures. The efficiency of the plate heat exchanger 5 is consequently mainly determined by the exchange surface and the conductivity of the heat transfer plates. The plate heat exchanger provided for energy recuperation giving, in a device according to the invention, the best results, meets the following requirements :
- a very large exchange surface;
- a small thickness of the plates;
- a high heat conductivity of the plates, therefor the application of aluminium.

. The basic efficiency of the heat exchanger from the device, can further be adapted to the actual temperature difference between the drained and the supplied air, the actual relatif humidity and any difference in flow along both sides of the plate heat exchanger.

Finally, it has still to be mentioned that, in order to recuparate as much as possible of the energy present in the drained air, it is intended to cool this air down as much as possible and also to deshydrate the air so as to recuparate also the latent heat of the condensed watervapour. Consequently, the operation of the heat pump of the device according to the invention is thereupon related to the operation of a drying apparatus. For such units, an important factor is defined in literature, namely the Specific Power Consumption (SPC) i.e. the energy amount which is necessary for condensing one liter of water from humid air by means of the unit concerned.

The invention is of course not limited to the embodiment described hereabove and many changes could be applied to this one without leaving from the scope of the patent application.

## Claims

1. A device for an energy-saving heat recuperation from a fluid, mainly for the heating of rooms, industrial buildings, halls, etc., characterized in that it is formed by the combination of a static heat exchanger, comprising separate channels for the circulation of an incoming and an outgoing fluid, and a heat pump which comprises an evaporator, a compressor, a condenser and an expansion valve, in such a manner that the outgoing fluid, which leaves the heat exchanger, is further cooled down in contact with the evaporator of said heat pump in order that a substantial amount of energy is recuperated from this fluid, whereas the power of the condenser of the heat pump is supplied to the fluid leaving the heat exchanger resulting, in a further temperature increase of said incoming fluid after the static heat exchanger.

2. A device according to claim 1, characterized in that said static heat exchanger is a compact heat exchanger.

3. A device according to one of the claims 1 and 2, characterized in that said static heat exchanger comprises aluminium plates.

4. A device according to one of the claims 1 to 3, characterized in that said static heat exchanger comprises synthetic plates.

5. A device according to one of the claims 1 to 4, characterized in that said channels, through which said incoming fluid and said outgoing fluid circulate, are disposed crosswise.

6. A device according to one of the claims 1 to 4, characterized in that said channels, through which said incoming fluid and said outgoing fluid circulate, are disposed substantially parallel.

7. A device according to claim 6, characterized in that the incoming and the outgoing fluid circulate in counterflow.

8. A device according to claim 6, characterized in that the incoming and the outgoing fluid circulate in the same direction.

9. A device according to one of the claims 1 to 8, characterized in that said incoming fluid is the exterior air and said outgoing fluid is the interior air
of a room to be heated.

Fig.1.

Fig.2.